# FASCICULE DE BREVET EUROPEEN

(11) **EP 1 039 785 B1**
(45) Date de publication et mention de la délivrance du brevet: **20.08.2003**
(21) Numéro de dépôt: 00400376.0
(22) Date de dépôt: 10.02.2000
(51) Int. Cl.: H05B 39/04, H02M 3/158

(54) **Système de régulation de tension pour des charges embarquées dans un véhicule automobile**
Spannungsreglerschaltung für Lasten an Bord eines Fahrzeuges
Voltage regulating system for loads on board of a vehicle

(30) Priorité: 23.03.1999 FR 9903576
(43) Date de publication de la demande: 27.09.2000
(73) Titulaire: VALEO VISION, 93012 Bobigny Cédex (FR)
(72) Inventeur: Leleve, Joel, 93800 Epinay S/Seine (FR); Charret, Jean Paul, 92130 Issy les Moulineaux (FR); Albou, Pierre, 75013 Paris (FR)
(74) Mandataire: Lemaire, Marc

(56) Documents cités:
- EP-A- 0 470 750
- FR-A- 2 707 021
- US-A- 4 902 958
- US-A- 5 414 341

## Description

La présente invention concerne les dispositifs d'alimentation électrique, notamment pour l'alimentation des ensembles électriques implantés dans les véhicules automobiles. L'invention s'applique particulièrement aux dispositifs d'alimentation des ensembles d'éclairage qui comprennent des sources lumineuses à incandescence ou de type diode électroluminescente, ou des systèmes électriques sensibles aux variations de la tension d'alimentation.

De tels dispositifs d'éclairage sont alimentés par une source d'énergie embarquée, les batteries de véhicule actuelles délivrant généralement une tension nominale d'environ 12 Volts.

Cependant, il est courant de constater des surtensions aux bornes des appareils alimentés par la batterie.

Ces surtensions peuvent être de courte durée, et ne perturber le fonctionnement de l'appareil que sur un intervalle de temps très court, ce qui peut être considéré comme acceptable.

Mais les surtensions du réseau d'alimentation peuvent également être prolongées, notamment par suite de la décharge d'éléments capacitifs, ou à cause d'un alternateur dont le régulateur est défectueux. En l'absence de régulation de tension supplémentaire directement aux bornes de l'appareil, le fonctionnement de celui-ci est alors durablement perturbé.

Dans le cas de projecteurs, une telle surtension prolongée, pouvant typiquement atteindre 18 Volts, provoque l'augmentation de l'intensité lumineuse émise, qui peut entraîner une violation des règlements photométriques par un éblouissement gênant, voire dangereux, de conducteurs circulant dans le sens opposé au véhicule.

Les surtensions peuvent aussi être volontaires, car les constructeurs augmentent parfois la puissance distribuée dans le véhicule pour compenser globalement les diverses chutes de tension liées au nombre croissant d'appareils électriques embarqués dans le véhicule (direction assistée électrique, suspension pilotée électrique,...).

Dans ce contexte, les projecteurs sont susceptibles d'émettre un rayonnement d'intensité trop forte, ce qui entraîne outre les effets d'éblouissement déjà cités ci-dessus le fait que la durée de vie des lampes à filament se trouve considérablement réduite.

Par ailleurs, pour faire face à l'augmentation déjà mentionnée de la puissance consommée par les appareils électriques embarqués, on a déjà prévu d'augmenter sensiblement la tension d'alimentation nominale délivrée par la batterie du véhicule. Ainsi certains véhicules comportent des batteries de 24 ou 42 Volts par exemple.

L'utilisation des appareils existants sans moyens intermédiaires d'ajustement de la tension est alors exclue, car les tensions délivrées aux bornes de ces appareils sont trop éloignées de leurs tensions nominales respectives de l'ordre de 12 Volts.

Dans le cas des lampes à filament qui sont majoritairement utilisées dans les projecteurs, on peut certes envisager de fabriquer des lampes dont la tension d'alimentation corresponde à la tension de la batterie du véhicule de 24 ou 42 Volts par exemple.

Mais les contraintes de conception et de fabrication du filament (qui doit comprendre un double spiralage très fin pour être porté à l'incandescence mais toutefois assez résistant pour ne pas être endommagé par la tension d'alimentation) rendraient de telles lampes coûteuses et fragiles. De plus, le filament de telles lampes ne serait pas adapté aux exigences photométriques imposées par certains miroirs de réflecteurs dits « à surface libre ».

Une autre solution consisterait alors à utiliser une deuxième source de tension dédiée à l'éclairage, ou encore à mettre en oeuvre un réseau électrique spécifique pour l'éclairage, relié à la batterie du véhicule par l'intermédiaire d'un abaisseur de tension. Mais ceci entraînerait une complexité et une longueur importante du réseau de câblage du véhicule, ce que les constructeurs cherchent à éviter étant donnés les coûts importants liés au câblage.

Une solution adaptée permettant de résoudre les inconvénients précités, liés à des surtensions persistantes ou permanentes, ou à l'augmentation de la tension nominale délivrée par la batterie de véhicule, consiste à associer à chaque lampe d'un projecteur ou d'un feu de signalisation un dispositif de régulation de tension permettant :
- d'une part, d'abaisser la tension à la valeur de consigne dudit projecteur ou feu dans le cas d'une alimentation générale du véhicule de tension supérieure à cette tension de consigne,
- et d'autre part, de réguler la tension pour minimiser les fluctuations des tensions pouvant survenir aux bornes d'une telle lampe.

La Demanderesse a décrit dans le document FR 2 707 021 un tel dispositif de régulation de tension.

Dans ce dispositif, un circuit électronique module la tension de la batterie du véhicule en une tension périodique à impulsions rectangulaires d'alimentation des lampes d'éclairage. Les durées des impulsions de cette tension d'alimentation sont définies de sorte que sa valeur moyenne s'ajuste sur une valeur de consigne donnée, correspondant à la tension nominale d'alimentation des lampes.

Un but de la présente invention est de permettre de réaliser un perfectionnement de ce dispositif de régulation, dans lequel le courant traversant les charges reste essentiellement constant, pour ainsi notamment accroître la durée de vie de ces charges, et notamment des lampes à incandescence.

Un autre but de l'invention est de permettre de réaliser une station de commutation et de régulation dont la structure soit simple et économique.

Afin d'atteindre ces buts, l'invention propose selon un premier aspect un dispositif de régulation de tension d'alimentation d'une charge électrique ayant une tension d'alimentation nominale, le dispositif étant alimenté par une source de tension continue de valeur variable, le dispositif comprenant un oscillateur générant un signal de commande rectangulaire dont le rapport cyclique varie avec la valeur de la tension continue lorsque cette dernière est supérieure à une tension de seuil donnée et comprenant en outre un interrupteur commandé par ledit signal de commande et monté en série avec la charge aux bornes de la source de tension, dispositif caractérisé en ce qu'il comprend en outre une inductance montée en série avec la charge et un composant à conduction unidirectionnelle en parallèle avec le montage série de la lampe et de l'inductance.

Des aspects préférés, mais non limitatifs, du dispositif selon l'invention sont les suivants :
- le composant à conduction unidirectionnel est un second interrupteur commandé.
- les deux interrupteurs commandés sont assujettis au même signal de commande.
- les deux interrupteurs commandés sont des transistors C-MOS respectivement à canal N et à canal P.
- les deux interrupteurs commandés sont montés en série sur la source de tension.

Selon un deuxième aspect, l'invention propose un système de gestion de l'alimentation de charges embarquées dans un véhicule automobile, comprenant au moins un dispositif selon l'une des caractéristiques énoncées ci-dessus pour réguler la tension d'alimentation d'une charge associée.

Des aspects préférés, mais non limitatifs du système selon l'invention sont les suivants :
- le système comprend également un module pour commander sélectivement l'alimentation de chaque dispositif de régulation,
- le système comprend également un module pour commander sélectivement l'alimentation de chaque charge en appliquant à chaque dispositif de régulation un signal de mise en service ou de mise hors service,
- le module de commande est constitué par un décodeur de signaux de mise en service ou de mise hors service véhiculés par un bus commun,
- le module de commande et les dispositifs de régulation font partie d'une même unité électronique.

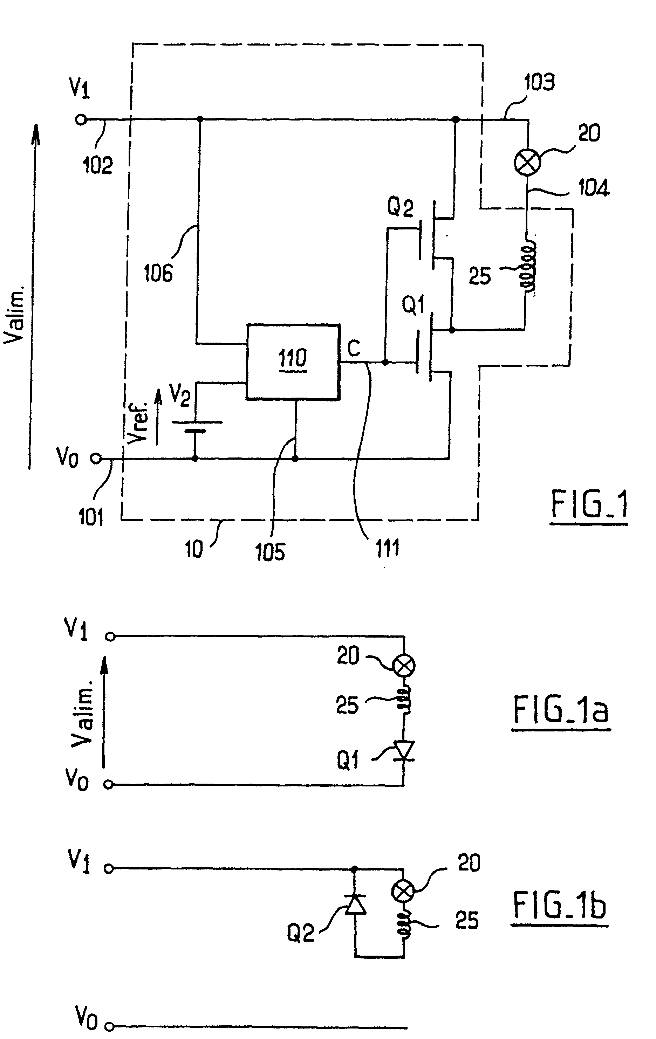

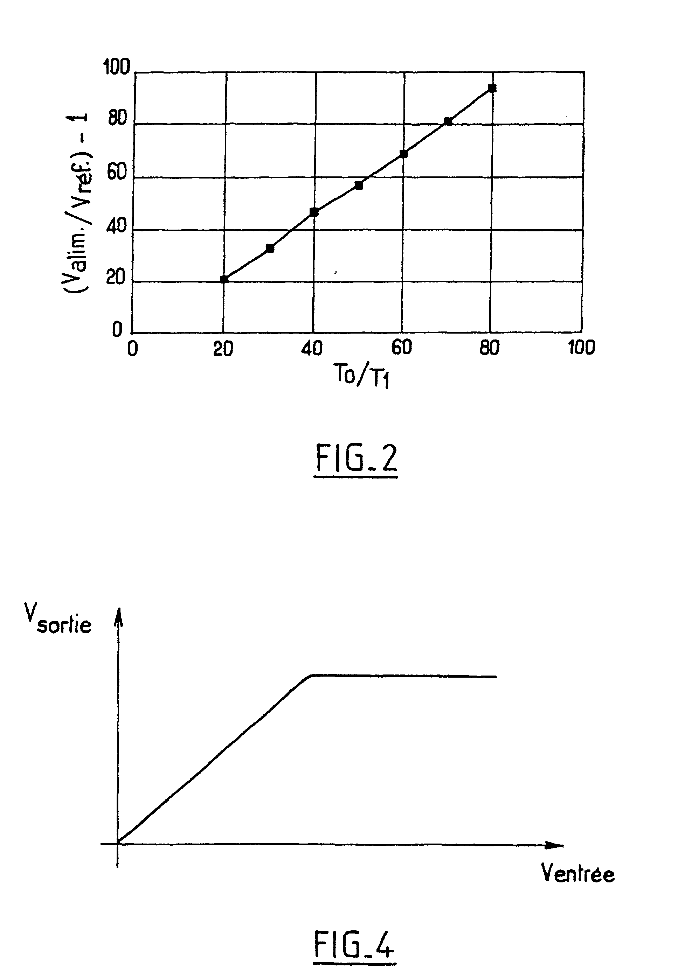

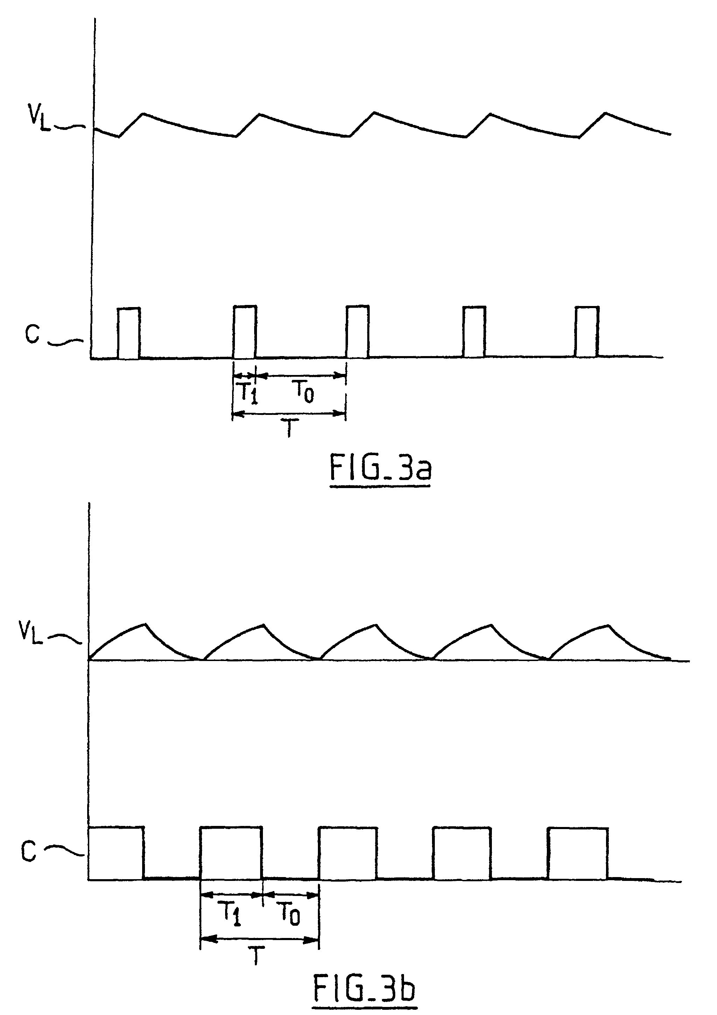

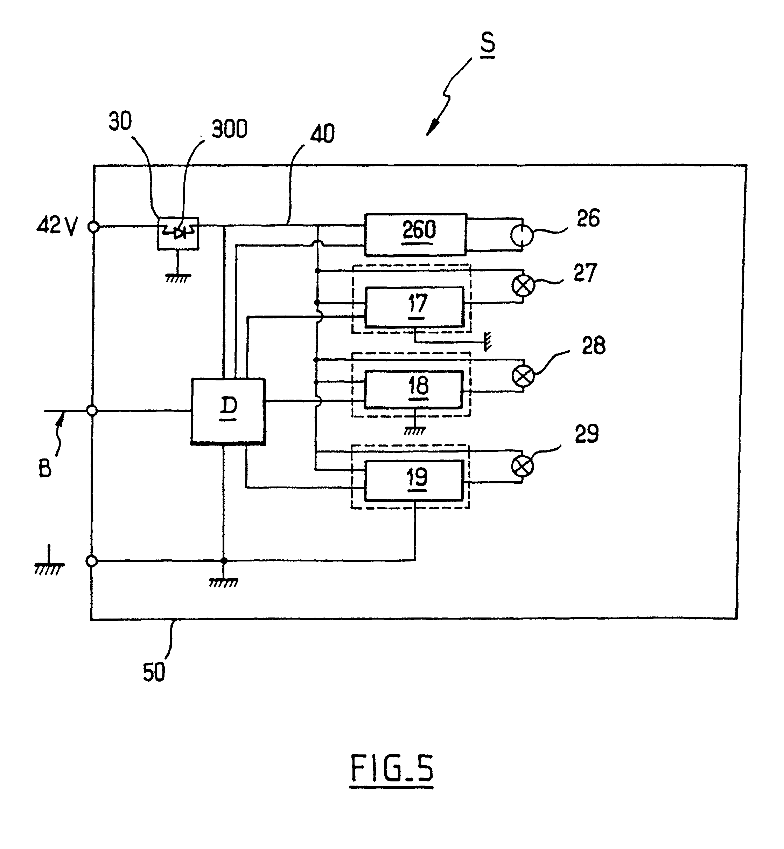

D'autres aspects, buts et avantages de l'invention apparaîtront mieux à la lecture de la description suivante d'une forme de réalisation de l'invention, donnée à titre d'exemple et faite en référence aux dessins annexés, sur lesquels :
. la figure 1 est un schéma d'un circuit selon l'invention permettant de réguler la tension délivrée aux bornes d'une charge électrique;
. les figures 1a et 1b sont des schémas de deux circuits alternativement équivalents au circuit de la figure 1 dans un mode de fonctionnement périodique dudit circuit selon l'invention;
. la figure 2 est un graphe montrant l'évolution d'un rapport caractéristique de la tension délivrée aux bornes de la charge de la figure 1 en fonction du rapport entre la tension d'alimentation du circuit de la figure 1 et la tension de consigne de la charge;
. les figures 3a et 3b sont des graphes montrant l'allure d'un signal de commande généré par ce circuit, et de la tension périodique correspondante délivrée aux bornes de la charge de la figure 1;
. la figure 4 est un graphe de la fonction de transfert de tension du circuit selon l'invention;
. la figure 5 est un schéma d'un dispositif de gestion électrique mettant en oeuvre des circuits selon l'invention dans un projecteur de véhicule automobile comprenant plusieurs sources lumineuses.

En référence à la figure 1, un circuit électronique de régulation 10 est alimenté par une source de tension Vₐₗᵢₘ définie par les potentiels constants V0 et V1 supérieur à V0, auxquels le circuit 10 est relié par des conducteurs électriques 101 et 102 respectivement. Ce circuit est branché par l'intermédiaire des conducteurs 103 et 104 aux bornes d'une charge 20 pouvant être par exemple une lampe à incandescence d'un projecteur ou d'un feu de signalisation d'un véhicule automobile.

Les potentiels V0 et V1 sont prélevés sur une source embarquée du véhicule, pouvant être par exemple les bornes de la batterie du véhicule, le potentiel V0 étant dans ce cas la masse du véhicule, la tension Vₐₗᵢₘ délivrée par cette batterie peut être de 12 Volts comme cela est courant, ou bien d'une valeur de 24 ou 42 Volts par exemple, pour diminuer les courants d'alimentation et donc la section des conducteurs lors de la présence de nombreux appareils embarqués.

Le circuit 10 comporte un module de commande 110 relié aux potentiels V0 et V1 par les conducteurs respectifs 105 et 106. Le module 110 est également relié à une source de potentiel V2 qui définit une tension V2 - V0 = V_{ref} avec le potentiel V0. Ce module est apte à émettre sur une borne de sortie 111 un signal de commande C.

Le module de commande 110 comporte un circuit comparateur et un circuit oscillateur fonctionnant selon le principe suivant :
Si Vₐₗᵢₘ est inférieure ou égale à V_{ref}, le module 110 délivre un signal de commande C égal à une tension fixe très voisine de Vₐₗᵢₘ (niveau « haut »)
Si maintenant Vₐₗᵢₘ est supérieure à V_{ref}, le module 110 envoie au conducteur 111 un signal C de commande rectangulaire de période invariable T=(T₀+T₁) tel que représenté sur la figure 3a : une période T de ce signal est composée d'un intervalle de temps T₁ pendant lequel le signal C est Vₐₗᵢₘ (niveau « haut »), puis d'un intervalle T₀ pendant lequel le signal C a une valeur constante proche de 0 Volt (niveau « bas »).

Le rapport T0/T1 du signal de commande C est égal à 0 si Vₐₗᵢₘ est inférieure ou égale à V_{ref} (dans ce cas, le signal C est uniformément au niveau « haut »). T0/T1 est par ailleurs sensiblement égal à (Vₐₗᵢₘ/V_{ref})-1, comme représenté sur la figure 2, si Vₐₗᵢₘ est supérieur à V_{ref}. On se reportera au document FR 2 707 021 au nom de la Demanderesse pour plus de précisions concernant le fonctionnement du module de commande 110.

En référence de nouveau à la figure 1, le signal de commande C est transmis aux grilles de deux transistors C-MOS Q1 et Q2 de types respectifs « canal N » et « canal P », branchés en série entre V0 et V1.

Les drains des deux transistors Q1 et Q2 sont reliés à une première borne d'une inductance 25. La lampe 20 est branchée par les conducteurs 103 et 104 entre le potentiel V1 et la seconde borne de l'inductance.

Ainsi, lorsque Vₐₗᵢₘ est inférieure ou égale à V_{ref}, alors la tension du signal C est au niveau haut et le transistor Q1 est passant alors que le transistor Q2 est bloqué. Dans ce cas, le circuit 10 est équivalent au circuit représenté sur la figure 1a, qui applique aux bornes du montage inductance/lampe, la tension Vₐₗᵢₘ diminuée de la tension de seuil de Q1. Cette tension d'alimentation étant continue, l'impédance de l'inductance 25 est faible et la tension aux bornes de la lampe 20 est sensiblement égale à Vₐₗᵢₘ.

Lorsque maintenant Vₐₗᵢₘ est supérieure à V_{ref}, les impulsions du signal C transmis aux grilles des deux transistors par le module de commande provoquent périodiquement l'ouverture d'un transistor pendant que l'autre est fermé et vice-versa. Un cycle de fonctionnement du circuit, tel que représenté sur la figure 3a, comprend alors les deux étapes suivantes :

Pendant la périodeT₁ (signal C « haut »), le transistor Q1 est passant et le transistor Q2 bloqué. Le circuit est donc pendant cet intervalle de temps T₁ encore équivalent à celui de la figure 1a, et la tension V_{L} aux bornes de la lampe 20 augmente de manière non linéaire pendant que l'impédance de l'inductance diminue.

Lorsque le signal de commande C passe au niveau bas (période T₀) c'est le transistor Q2 qui est passant alors que le transistor Q1 est bloqué. Le circuit 10 est alors équivalent à celui représenté sur la figure 1b, dans lequel la lampe 20, l'inductance 25 et le transistor Q2 (qui étant passant mais directionnel joue alors un rôle équivalent à celui d'une diode) sont eliés en série en une boucle fermée de type « roue libre » dans lequel le courant circule pour diminuer progressivement. La tension V_{L} aux bornes de la lampe 20 décroît alors de manière non linéaire jusqu'à sa valeur de début de cycle, comme indiqué sur la figure 32.

La durée des impulsions délivrées par le module de commande 110 est comme on l'a dit régulée de sorte que le rapport cyclique T₀/T₁ du signal soit sensiblement égal à (Vₐₗᵢₘ /V_{ref} - 1) quand Vₐₗᵢₘ est supérieure à V_{ref}. Lorsque la valeur de Vₐₗᵢₘ augmente, la durée des impulsions de tension de niveau haut délivrées par le module 110 diminue donc (c'est à dire que la durée T₀ augmente tandis que la durée T₁ diminue), de façon à ce que la valeur moyenne dans le temps de la tension aux bornes de la lampe reste sensiblement égale à V_{ref}.

La figure 3b (sur laquelle l'échelle de V_{L} est différente de celle de la figure 3a) illustre le fonctionnement du circuit lorsque la valeur de la tension d'alimentation Vₐₗᵢₘ diminue, tout en restant supérieure à V_{ref}. Sur cette figure, les durées des périodes T₀ et T₁ sont sensiblement égales.

En conséquence, la tension aux bornes de la lampe 200 augmente dans cet exemple pendant une demi-période, puis décroît pendant la demi-période suivante. La valeur moyenne de la tension V_{L} aux bornes de la lampe reste alors sensiblement égale à la valeur V_{L} dans le cas de la figure 3a, car l'augmentation de la durée T₁ compense la diminution de la valeur de Vₐₗᵢₘ de manière à ce que le produit T₁*Vₐₗᵢₘ reste sensiblement égal à T*V_{ref}.

Ainsi, dès que Vₐₗᵢₘ est supérieure à V_{ref}, la tension aux bornes de la lampe 20 est maintenue sur une valeur moyenne proche de V_{ref}.

La valeur de cette tension V_{ref} est ajustée sur la tension nominale d'alimentation de la lampe 20. L'évolution de la tension moyenne aux bornes de la lampe 20 en fonction de la valeur de Vₐₗᵢₘ est schématisée sur la figure 4.

Pour éviter qu'un observateur regardant le projecteur ou le feu contenant la lampe 20 ne perçoive sensiblement les variations de l'intensité lumineuse délivrée par cette lampe, la période T=T₀+T₁ des signaux de commande du module 110 est ajustée à une valeur inférieure à la durée de la persistance rétinienne et par exemple égale à 0,03 seconde.

De plus, le circuit selon l'invention permet grâce à l'inductance 25 de lisser l'évolution de la tension aux bornes. de la lampe, et donc de stabiliser encore l'intensité lumineuse délivrée par celle-ci.

A cet égard, la valeur de cette inductance est choisie pour assurer un tel lissage sans toutefois excessivement ralentir, lors de l'allumage de la lampe, la montée de la tension jusqu'à sa valeur nominale.

Dans une variante du circuit non représentée sur les figures, le transistor Q2 est remplacé par une diode branchée en parallèle sur le montage série de la lampe et de l'inductance, la diode autorisant le passage du courant du drain de Q1 vers le potentiel V₁.

Dans cette variante, le fonctionnement général du circuit est le même que celui du circuit de la figure 1, son rendement global se trouvant toutefois légèrement diminué par la puissance dissipée dans la diode, dont la tension de seuil est de l'ordre de 0,3 à 0,7 Volts alors que la valeur du seuil du transistor C-MOS peut être de l'ordre de 0,1 Volts.

En référence maintenant à la figure 5, on a représenté un système de gestion électrique S, comprenant dans un boîtier 50 optique d'un véhicule automobile quatre charges 26, 27, 28 et 29 constituées respectivement par une lampe à décharge d'un projecteur de type code, et par trois lampes à filament d'un projecteur de route, d'un projecteur antibrouillard et d'un clignotant. Les trois lampes à filament 27, 28 et 29 sont de type classique, prévu pour fonctionner sous une tension de l'ordre de 12 Volts.

Le boîtier comprend également un décodeur D, relié à un bus B de transmission de signaux numériques de commande multiplexés, de façon connue en soi. L'utilisation d'un tel bus déployé dans le véhicule à proximité des appareils électriques du véhicule pour leur transmettre des signaux de gestion se développe actuellement avec le nombre et la sophistication croissante de ces appareils.

Le boîtier B est également relié aux bornes d'une source d'alimentation du véhicule, réalisée ici sous la forme d'une batterie de 42 Volts.

Un circuit de régulation de tension tel que décrit en référence à la figure 1 et alimenté par la tension de 42 Volts est associé à chacune des lampes 27, 28, 29, la lampe à décharge 26 étant associée à un ballast 260, qui lui est alimenté directement par la tension de 42 Volts.

Les lampes 26, 27 et 28 sont ainsi connectées à la sortie de leur circuit de régulation respectif 17, 18 et 19 qui leur délivre une tension moyenne et sensiblement égale à leur tension nominale (typiquement 13,2 ou 13,5 Volts).

Les circuits de régulation 17, 18, 19, de même que le circuit ballast 260, sont reliés en série à un conducteur 40 lui même relié à la source de potentiel de 42 Volts par l'intermédiaire d'un circuit de protection 30, constitué ici par une diode 300.

Le ballast 260, ainsi que les modules de régulation de tension 17, 18 et 19, sont également reliés au décodeur D qui commande leur alimentation et permet ainsi au conducteur du véhicule de gérer le fonctionnement des quatre charges du projecteur grâce à la commande des signaux numériques transmis par le bus B.

On observera ici que, grâce à un tel agencement, les transistors Q1 et Q2 des circuits de régulation peuvent être utilisés pour la mise en service et hors service des lampes, donc sans nécessiter d'interrupteur commandé supplémentaire. Concrètement, les signaux de commande individuels délivrés par le décodeur D interviennent dans les circuits 17, 18, 19 par une simple logique combinatoire pour sélectivement autoriser leur module de commande à délivrer les signaux de commande ou le leur interdire.

Les circuits 17, 18 et 19 comprennent également dans ce mode de réalisation les dispositifs non représentés de filtrage et/ou de protection habituellement intégrés dans les systèmes électroniques automobiles. Dans une variante de réalisation avantageuse, le système comprend également des moyens de diagnostic sur l'état des lampes.

On notera par ailleurs que le fait de placer le dispositif de protection 30 en amont des circuits 17, 18 et 19 qui réduisent la valeur de la tension permet de traverser la diode 300 avec un courant sensiblement inférieur à celui qui circulerait dans la partie du système située en aval des régulateurs, et donc d'améliorer le rendement global du système en diminuant la puissance dissipée dans la diode par effet Joule.

De façon avantageuse, le circuit décodeur D et les circuits régulateurs 17, 18, 19, de même que les circuits auxiliaires associés (protection, filtrage, diagnostic, ...), peuvent être regroupés au sein d'une même unité électronique recevant la tension de batterie et les signaux de bus B, et comportant autant de sorties que de charges électriques à commander et à alimenter.

Un tel système de gestion électrique permet donc d'alimenter des lampes - ou toutes autres charges électriques nécessitant une tension d'alimentation peu fluctuante avec une alimentation principale sous une tension nettement supérieure à la tension de consigne de ces charges, sans ajouter d'éléments importants de câblage dans le véhicule.

## Revendications

1. Dispositif (10) de régulation de tension d'alimentation d'une charge électrique (20) ayant une tension d'alimentation nominale, le dispositif étant alimenté par une source de tension continue de valeur variable (Vₐₗᵢₘ), le dispositif comprenant un oscillateur (110) générant un signal de commande (C) rectangulaire dont le rapport cyclique (T₀/T₁) varie avec la valeur de la tension continue lorsque cette dernière est supérieure à une tension de seuil donnée (V_{ref}) et comprenant en outre un interrupteur commandé (Q1) par ledit signal de commande et monté en série avec la charge aux bornes de la source de tension, dispositif **caractérisé en ce qu'**il comprend en outre une inductance (25) montée en série avec la charge et un composant à conduction unidirectionnelle (Q2) en parallèle avec le montage série de la lampe et de l'inductance.

2. Dispositif de régulation selon la revendication 1, **caractérisé en ce que** le composant à conduction unidirectionnel (Q2) est un second interrupteur commandé.

3. Dispositif de régulation selon la revendication 2, **caractérisé en ce que** les deux interrupteurs commandés (Q1, Q2) sont assujettis au même signal de commande (C).

4. Dispositif de régulation selon la revendication 3, **caractérisé en ce que** les deux interrupteurs commandés sont des transistors C-MOS respectivement à canal N et à canal P.

5. Dispositif de régulation selon la revendication 3 ou 4, **caractérisé en ce que** les deux interrupteurs commandés sont montés en série sur la source de tension (Vₐₗᵢₘ).

6. Système (S) de gestion de l'alimentation de charges (26, 27, 28, 29) embarquées dans un véhicule automobile, comprenant au moins un dispositif (17, 18, 19) selon l'une des revendications précédentes pour réguler la tension d'alimentation d'une charge associée (27, 28, 29).

7. Système selon la revendication 6, **caractérisé en ce qu'**il comprend également un module (D) pour commander sélectivement l'alimentation de chaque charge en appliquant à chaque dispositif de régulation un signal de mise en service ou de mise hors service.

8. Système selon la revendication 7, **caractérisé en ce que** le module de commande (D) est constitué par un décodeur de signaux de mise en service ou de mise hors service véhiculés par un bus commun (B).

9. Système selon l'une des revendications 7 ou 8, **caractérisé en ce que** le module de commande (D) et les dispositifs de régulation (17, 18, 19) font partie d'une même unité électronique.

## Patentansprüche

1. Vorrichtung (10) zur Regelung der Speisespannung einer elektrischen Last (20), die eine Nominal-Speisespannung hat, wobei die Vorrichtung durch eine Gleichspannungsquelle mit variablem Wert (Vₐₗᵢₘ) gespeist wird, wobei die Vorrichtung einen Oszillator (110) umfasst, der ein rechteckiges Steuersignal (C) erzeugt, dessen zyklisches Verhältnis (T₀/T₁) mit dem Wert der Gleichspannung variiert, wenn diese höher als eine gegebene Schwellenspannung (V_{ref}) ist, und die zudem einen durch das Steuersignal betätigten und mit der Last an den Klemmen der Spannungsquelle in Reihe geschalteten Schalter (Q1) umfasst,
**dadurch gekennzeichnet, dass** sie ferner eine mit der Last in Reihe geschaltete Induktanz (25) und ein nur in einer Richtung leitendes Bauteil (Q2) umfasst, das mit der Reihenschaltung der Lampe und der Induktanz parallel geschaltet ist.

2. Regelungsvorrichtung nach Anspruch 1,
**dadurch gekennzeichnet, dass** das nur in einer Richtung leitende Bauteil (Q2) ein zweiter gesteuerter Schalter ist.

3. Regelungsvorrichtung nach Anspruch 2,
**dadurch gekennzeichnet, dass** die zwei gesteuerten Schalter (Q1, Q2) mit demselben Steuersignal (C) beaufschlagt sind.

4. Regelungsvorrichtung nach Anspruch 3,
**dadurch gekennzeichnet, dass** die zwei gesteuerten Schalter C-MOS Transistoren mit N-Kanal bzw. P-Kanal sind.

5. Regelungsvorrichtung nach Anspruch 3 oder 4,
**dadurch gekennzeichnet, dass** die zwei gesteuerten Schalter an der Spannungsquelle (Vₐₗᵢₘ) in Reihe geschaltet sind.

6. System (S) zur Steuerung der Stromversorgung von fahrzeugseitigen Lasten (26, 27, 28, 29), mit wenigstens einer Vorrichtung (17, 18, 19) nach einem der vorhergehenden Ansprüche zum Regeln der Speisespannung einer zugeordneten Last (27, 28, 29).

7. System nach Anspruch 6,
**dadurch gekennzeichnet, dass** es ferner ein Modul (D) zum abwechselnden Steuern der Versorgung jeder Last durch Anlegen eines Signals zur Inbetriebnahme oder Außerbetriebsetzung an jede Regelungsvorrichtung umfasst.

8. System nach Anspruch 7,
**dadurch gekennzeichnet, dass** das Steuermodul (D) durch einen Dekodierer von Signalen zur Inbetriebnahme oder Außerbetriebsetzung gebildet ist, die durch einen gemeinsamen Bus (B) übertragen werden.

9. System nach einem der Ansprüche 7 oder 8,
**dadurch gekennzeichnet, dass** das Steuermodul (D) und die Regelungsvorrichtungen (17, 18, 19) Bestandteil ein und derselben elektronischen Einheit sind.

## Claims

1. Device (10) for regulating the supply voltage of an electrical load (20) having a nominal supply voltage, the device being supplied by a DC voltage source with a variable value (Vₐₗᵢₘ), the device comprising an oscillator (110) generating a rectangular control signal (C) whose cyclic ratio (T₀/T₁) varies with the value of the DC voltage when the latter is greater than a given threshold voltage (V_{ref}) and also comprising a switch (Q1) controlled by the said control signal and connected in series with the load at the terminals of the voltage source, a device **characterised in that** it also comprises an inductor (25) connected in series with the load and a unidirectional-conduction component (Q2) in parallel with the series connection of the lamp and inductor.

2. Regulation device according to Claim 1, **characterised in that** the unidirectional-conduction component (Q2) is a second controlled switch.

3. Regulation device according to Claim 2, **characterised in that** the two controlled switches (Q1, Q2) are dependent on the same control signal (C).

4. Regulation device according to Claim 3, **characterised in that** the two control switches are CMOS transistors respectively of the n channel and p channel type.

5. Regulation device according to Claim 3 or 4, **characterised in that** the two control switches are connected in series with the voltage source (Vₐₗᵢₘ).

6. System (S) for managing the supply of loads (26, 27, 28, 29) on board a motor vehicle, comprising at least one device (17, 18, 19) according to one of the preceding claims for regulating the supply voltage of an associated load (27, 28, 29).

7. System according to Claim 6, **characterised in that** it also comprises a module (D) for selectively controlling the supply to each load by applying an on or off signal to each regulation device.

8. System according to Claim 7, **characterised in that** the control module (D) consists of a decoder for on or off signals conveyed by a common bus (B).

9. System according to one of Claims 7 or 8, **characterised in that** the control module (D) and the regulation devices (17, 18, 19) form part of one and the same electronic unit.
